# EUROPEAN PATENT SPECIFICATION

(11) **EP 2 924 955 B1**
(45) Date of publication and mention of the grant of the patent: **20.12.2017**
(21) Application number: 15158798.7
(22) Date of filing: 12.03.2015
(51) Int. Cl.: H04L 29/08

(54) **Apparatus, communication control system, and communication control method**
VORRICHTUNG, KOMMUNIKATIONSSTEUERUNGSSYSTEM UND KOMMUNIKATIONSSTEUERUNGSVERFAHREN
APPAREIL, SYSTÈME DE COMMANDE DE COMMUNICATION ET PROCÉDÉ DE COMMANDE DE COMMUNICATION

(30) Priority: 27.03.2014 JP 2014066459
(43) Date of publication of application: 30.09.2015
(73) Proprietor: FUJITSU LIMITED, Kawasaki-shi, Kanagawa 211-8588 (JP)
(72) Inventor: Yasaki, Koichi, Kawasaki-shi, Kanagawa 211-8588 (JP); Ito, Hidenobu, Kawasaki-shi, Kanagawa 211-8588 (JP); Nimura, Kazuaki, Kawasaki-shi, Kanagawa 211-8588 (JP)
(74) Representative: Cooper-Rolfe, Elizabeth Louise

(56) References cited:
- US-A1- 2003 187 990
- US-A1- 2007 208 848
- US-B2- 7 127 541

## Description

### FIELD

The embodiments discussed herein are related to an apparatus, a communication control system, and a communication control method.

### BACKGROUND

In recent years, systems have been constructed which enable electronic devices to perform wireless communication with each other via a network such as Bluetooth (registered trademark, hereinafter the same shall apply) or Wi-Fi (registered trademark, hereinafter the same shall apply). A terminal apparatus such as a smartphone is coupled to a peripheral device, and the peripheral device may have a function of an access point (AP) in a wireless LAN in some cases. In a coupling form in which the peripheral device functions as an access point, the coupling is established between the peripheral device as a master side and the smartphone as a slave side. Accordingly, the smartphone sends polling to the peripheral device, makes an inquiry about a coupling state of the peripheral device, couples to the peripheral device if possible, and terminates the coupling with other peripheral devices, thereby switching the coupling and the uncoupling of the wireless LAN to and from multiple peripheral devices. In other words, the smartphone occasionally switches the wireless LAN to communicate with multiple peripheral devices. This enables quasi-simultaneous accesses to peripheral devices by time division. The related art document is Japanese Laid-open Patent Publication No. 2012-80284. US 2003/187990 discloses a method for maintaining a seamless communication session while allowing users to switch devices. US7127541 discloses a method for implementing access to a peripheral device by multiple computers. US 2007/208848 discloses a connection routing manager that provides connections between multiple peripheral devices and a computer.

### SUMMARY

According to an aspect embodying the invention, an apparatus includes a session establishing unit configured to establish sessions of communication with a plurality of devices in an upper layer of a communication protocol stack, and a coupling switching unit configured to, in response to an access request to a first device out of the plurality of devices, switch coupling to the first device by terminating coupling to a second device out of currently-coupled devices among the plurality of devices in a lower layer of the communication protocol stack while holding the sessions established in the upper layer; wherein the coupling switching unit is further configured to, when a predetermined period of time is elapsed after the coupling is switched to the first device, switch the coupling to a predetermined device other than the first device out of the plurality of devices by terminating the coupling to the first device in the lower layer while holding the sessions established in the upper layer.

### BRIEF DESCRIPTION OF DRAWINGS

FIG. 1 is a diagram illustrating an example of processing delay when wireless communication with multiple peripheral devices is performed;
FIG. 2 is a flowchart illustrating an example of coupling switching processing when the wireless communication is performed;
FIG. 3 is a diagram illustrating an example of a communication control system according to one embodiment;
FIG. 4 is a diagram illustrating a hardware configuration example of a smartphone according to the one embodiment;
FIG. 5 is a diagram illustrating a function configuration example of the smartphone according to the one embodiment;
FIG. 6 is a diagram illustrating an example of a task table according to the one embodiment;
FIGs. 7A and 7B are flowcharts illustrating an example of communication control processing according to a first embodiment;
FIG. 8 is a time chart illustrating an example of the communication control processing according to the first embodiment;
FIG. 9 is a diagram illustrating a configuration example a communication control system according to the first embodiment;
FIG. 10 is a diagram illustrating a configuration example a communication control system according to a second embodiment;
FIG. 11 is a flowchart illustrating an example of a device control processing according to the second embodiment; and
FIG. 12 is a diagram illustrating a configuration example a communication control system according to a third embodiment.

### DESCRIPTION OF EMBODIMENTS

A processing load and the like in communication with a given peripheral device may cause delay in coupling with other peripheral devices in some cases. For example, when image data captured by a camera that is one of the peripheral devices is transmitted to a smartphone, if the data captured by the camera is enormous, it takes much time to transfer the data from the camera to the smartphone, and to display the captured image on the smartphone. This disables the smartphone to couple to other peripheral devices during the period of time to disadvantageously generate delay in communication processing with the other peripheral devices.

One aspect of the present disclosure is to provide a terminal apparatus, a communication control system, and a communication control method that can increase the efficiency of coupling when wireless communication with multiple peripheral devices is performed.

Hereinafter, embodiments of the present disclosure will be explained with reference to the attached drawings. Note that, in the description and the drawings, the same reference numerals are given to the components having the substantially same configuration, and overlapped explanations are omitted.

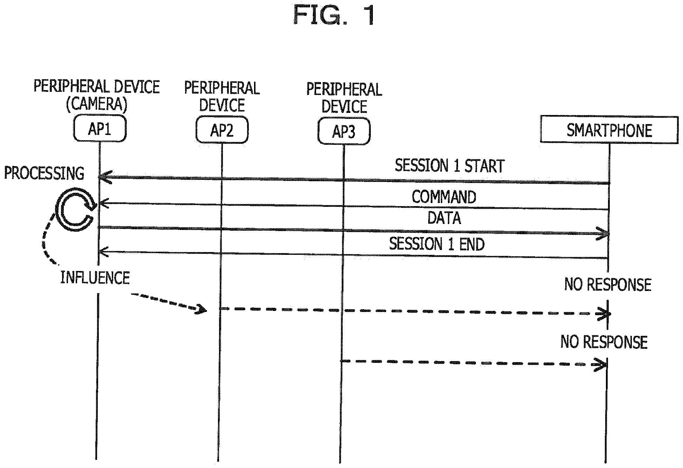

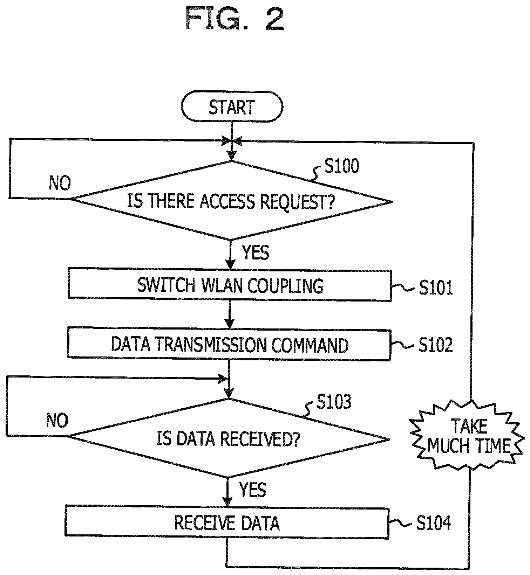

For example, processing of transmitting data captured by a camera that is one of peripheral devices to a smartphone will be explained with reference to FIG. 1 and FIG. 2. FIG. 1 illustrates an example of a case where processing delay when wireless communication with multiple peripheral devices is performed is generated. FIG. 2 is a flowchart illustrating an example of coupling switching processing when the wireless communication is performed.

Firstly, a smartphone starts a session 1 with a camera (AP1) (Session 1 start). Next, the smartphone transmits an access request command (command) to the camera. The camera that has received the access request command transmits data captured by the camera. If the transmission of the data is finished, the processing ends the session 1 (Session 1 end).

At this time, if the data captured by the camera is enormous, it takes much time after the data is transferred from the camera to the smartphone and before the captured image is displayed on the smartphone. This disables the smartphone to couple to other peripheral devices AP2 and AP3 during the period to generate delay (no response) in communication processing with the other peripheral devices AP2 and AP3.

FIG. 2 is an example of processing executed by an application of the smartphone. When the smartphone receives data captured by the camera (AP1), it is determined whether an access request (data request) command is transmitted (step S100). If the access request (data request) command is transmitted, the smartphone performs coupling switching of terminating the coupling with other peripheral devices, and coupling a wireless local area network (WLAN) to the peripheral device AP1 (step S101). Next, the smartphone transmits a data transmission command to the peripheral device AP1 (step S102), and waits until the smartphone receives the data (step S103). Next, the smartphone receives the data (step S104), returns the processing to step S100 after the reception of the data is completed, and waits a next access request.

Meanwhile, when the smartphone acquires data from the peripheral device AP2, it is determined whether an access request command is transmitted (step S100). If the access request command is transmitted, the smartphone performs coupling switching of terminating the coupling with the peripheral device AP1 that is currently coupled, and coupling the wireless LAN to the peripheral device AP2 (step S101). Next, the smartphone transmits a data transmission command to the peripheral device AP2 (step S102), and waits until it is determined that the data is received (step S103). However, if data transmission from the peripheral device AP1 takes much time, the peripheral device AP2 may not perform coupling switching until the data transmission from the peripheral device AP1 is completed, and may not establish a session. As a result, it takes much time for the smartphone to receive data from the peripheral device AP2 (step S104). Similarly, it takes much time for the smartphone to receive data also from the peripheral device AP3 (step S104).

To cope with this problem, the communication control system according to one embodiment of the present disclosure, which is described hereinafter, can increase the efficiency of the coupling when wireless communication with multiple peripheral devices is performed, and can smoothly couple and terminate the communication to and from the multiple peripheral devices. Hereinafter, the communication control system according to the present embodiment will be explained.

### [Overall Configuration of System]

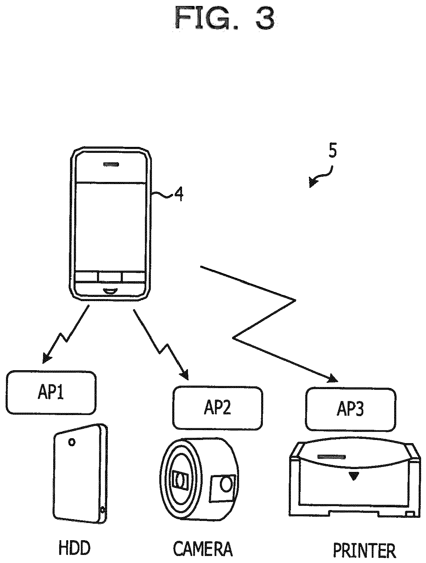

Firstly, a communication control system according to a first embodiment of the present disclosure will be explained with reference to FIG. 3. FIG. 3 illustrates an example of the communication control system according to the first embodiment of the present disclosure.

This communication control system 5 according to the present embodiment includes the peripheral devices AP1, AP2, and AP3 and a smartphone 4.

The peripheral devices AP1, AP2, and AP3 have functions as access points (AP) in the wireless LAN. Hereinafter, the peripheral devices AP1, AP2, and AP3 are also collectively referred to as a peripheral device AP. Examples of the peripheral device AP can include a hard drive disk (HDD), a camera, a printer, a copier, a scanner, of a set top box (STB). However, the peripheral device AP is not limited these, and may preferably be a device that can be coupled to the smartphone 4 via the wireless LAN such as Wi-Fi.

The smartphone 4 is an example of a terminal apparatus that performs wireless communication with multiple peripheral devices APs via the wireless LAN such as Wi-Fi. Other examples of the terminal apparatus can include a tablet terminal, a mobile telephone, an electronic book, a game device, an electronic dictionary, a music playback device, and other apparatuses.

### [Hardware Configuration of Smartphone]

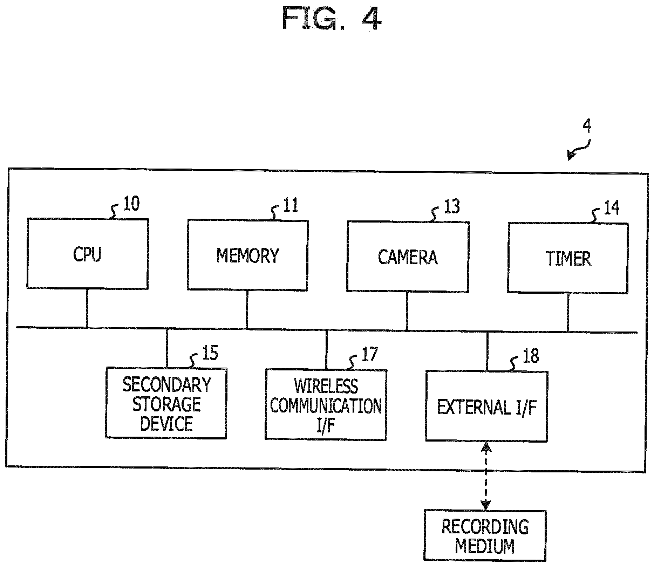

Next, an example of a hardware configuration of the smartphone 4 according to the present embodiment will be explained with reference to FIG. 4. FIG. 4 illustrates an example of a hardware configuration of the smartphone according to the present embodiment.

The smartphone 4 according to the one embodiment a central processing unit (CPU) 10, a memory 11, a camera 13, a timer 14, a secondary storage device 15, a wireless communication interface (I/F) 17, and an external I/F 18.

The CPU 10 controls in a centralized manner the respective units provided in the smartphone 4. The memory 11 stores therein a program for implementing functions provided in the smartphone 4. Moreover, the secondary storage device 15 may preferably store therein a control program executed by the CPU 10, an OS program, and an application program for executing various kinds of functions included in the smartphone 4 by the CPU 10. The CPU 10 reads a program stored in the memory 11 or the secondary storage device 15 and executes the program to implement various kinds of functions of the smartphone 4. For example, the CPU 10 successively captures and decodes instructions (commands) of the application program, and executes the content thereof, calculation, data transfer, control, and the like. In that case, the CPU 10 performs communication with the peripheral device AP in response to a request from the application program, and executes the application in association with the peripheral device AP.

The camera 13 includes a lens and an image pickup element, and photographs a printed matter on which a subject is printed or a document to take in image data thereof in the smartphone 4. The timer 14 measures a predetermined time. The memory 11 can be configured to include a read only memory (ROM), a random access memory (RAM), or the like. The secondary storage device 15 can be configured to include a storage device such as an electrically erasable programmable read only memory (EEPROM), a flash memory, a hard disk drive (HDD).

The wireless communication I/F 17 is an interface for performing wireless communication with an external apparatus. For example, the wireless communication I/F 17 is an interface for implementing any of wireless communication schemes including infrared ray communication such as IrDA or IrSS, communication via Bluetooth, communication via Wi-Fi, and a non-contact type IC card.

The external I/F 18 is an interface for coupling an external apparatus to the smartphone 4. For example, the external I/F 18 is implemented by a socket into which an outboard recording medium (memory card or the like) is inserted, a high definition multimedia interface (HDMI, registered trademark) terminal, a universal serial bus (USB) terminal, or the like. In this case, the CPU 10 acquires data from the external apparatus via the external I/F 18.

### [Function Configuration of Smartphone]

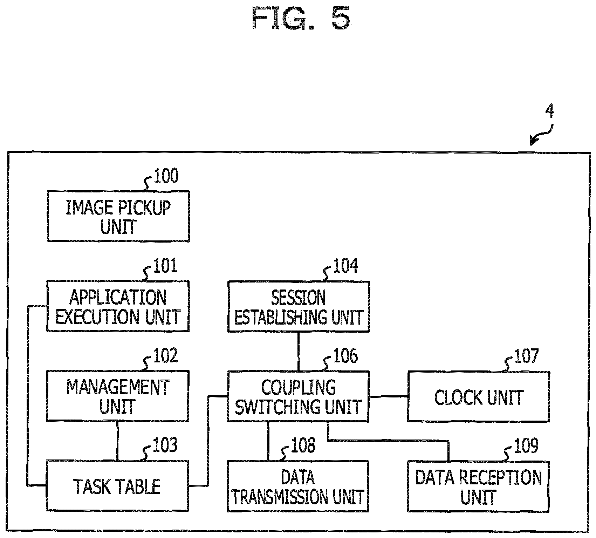

Next, an example of a function configuration of the smartphone 4 according to the present embodiment will be explained with reference to FIG. 5. FIG. 5 illustrates an example of the function configuration of the smartphone according to the present embodiment.

The smartphone 4 according to the one embodiment includes an image pickup unit 100, an application execution unit 101, a management unit 102, a task table 103, a session establishing unit 104, a coupling switching unit 106, a clock unit 107, a data transmission unit 108, and a data reception unit 109.

The image pickup unit 100 takes in image data in which a desired subject is captured. The image pickup unit 100 is implemented, for example, by the camera 13. The application execution unit 101 executes an application mounted in the smartphone 4. When processing of acquiring data from the peripheral device AP during the execution of the application is generated, the application execution unit 101 requests coupling of communication with the peripheral device AP.

The session establishing unit 104 establishes a session of communication with the peripheral device AP in an application layer. The application layer is an application layer of a communication protocol stack and is an upper layer to the physical layer.

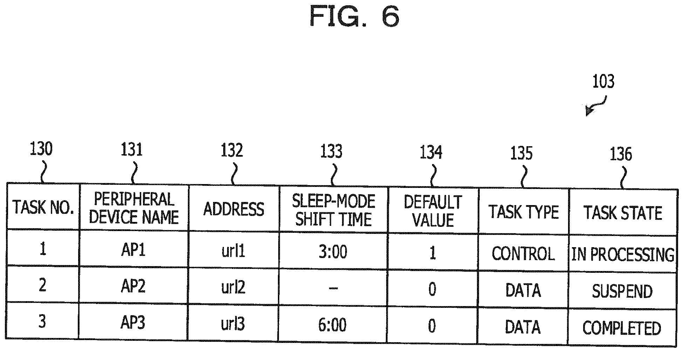

The management unit 102 stores task information on the communication with the peripheral device generated in the established session in the task table 103, and manages the task information. FIG. 6 illustrates an example of the task table 103 according to the one embodiment. The task table 103 stores therein a task No. 130, a peripheral device name 131, a peripheral device address 132, a sleep-mode shift time 133, a default value 134, a task type 135, and a task state 136. These pieces of information are an example of task information on the communication with the peripheral device generated in the established session. For example, upon generation of a task such as an access request or data transmission occurring after the session is established, task information on the communication in that task is stored. When the communication such as the access request or the data transmission with the peripheral device is finished, the task information is automatically erased from the task table 103. In other words, the task table 103 has a function of first in first out (FIFO).

The task No. 130 is the sequence numbers of access requests (data request commands or other commands) to the peripheral devices AP1, AP2, and AP3 and responses (data transmission, Wait notification) from the peripheral devices AP1, AP2, and AP3 being generated and stored in the task table 103. The peripheral device name 131 indicates an identification name of the peripheral device AP1, AP2, or AP3. The peripheral device address 132 indicates an address of the peripheral device AP1, AP2, or AP3 used in communication with the peripheral device AP1, AP2, or AP3. For example, an MAC address may preferably be used as the peripheral device address 132.

The sleep-mode shift time 133 indicates a period of time before a power supply of the peripheral device AP1, AP2, or AP3 is turned off. The peripheral device AP1, AP2, or AP3 is shifted to an energy-saving mode (so-called sleep mode) that is set for each peripheral device when the shift time to the sleep mode is elapsed.

The default value 134 is set to "0" if an application being executed is an application being operated in the background, and is set to "1" if a front application (application other than the application being operated in the background).

In the task type 135, "Control" of a control base or "Data" of a data base is set. The task type 135 is set as the control base for a task to control the peripheral device AP, or is set as the data base for a task to perform data communication with the peripheral device AP. An example of the control base task can include transmission of a command that controls ON and OFF of a power supply of the peripheral device AP. An example of the data base task can include transmission of image data that constitutes a screen.

The task state 136 indicates the progress of a task. "In processing" indicates that the task is currently processed. "Suspend" indicates that the task is suspended halfway. "Completed" indicates that the task is completely processed. When the task state 136 becomes "completed", the task information is automatically erased from the task table 103.

As explained above, task information on communication stored in the task table 103 may preferably include information indicating the priority of communication with the peripheral device AP. For example, the information indicating the priority of communication with the peripheral device AP may preferably include the task No. 130 that indicates the sequence numbers of the respective tasks being generated. In this case, a task is older as the task No. 130 is smaller, and the task may preferably be determined as a task to be processed with higher priority.

The information indicating the priority of communication with the peripheral device AP may preferably include the sleep-mode shift time 133. In this case, a task may preferably be determined as a task to be processed with higher priority as the sleep-mode shift time 133 is shorter.

The information indicating the priority of communication with the peripheral device AP may preferably include the default value 134. In this case, a task may preferably be determined as a task to be processed with higher priority when the default value 134 is set to "1" because the front application is operated, than the background application that is set to "0".

The information indicating the priority of communication with the peripheral device AP may preferably include the task state 136. In this case, when the task state 136 is "suspend", a task is in a halfway state of the processing, and the task may preferably be determined to have a priority lower than a task of which the task state 136 is "in processing".

The coupling switching unit 106 switches coupling and uncoupling of the multiple peripheral devices APs in a physical layer, while the sessions established in the application layer are held. For example, in response to an access request to a different peripheral device, the coupling switching unit 106 terminates the coupling to the peripheral device currently coupled in the physical layer, and switches the coupling to the different peripheral device targeted by the access request. In that case, the coupling switching unit 106 specifies a peripheral device to which next coupling switching is performed in the physical layer, based on the task information on the communication stored in the task table 103 while the sessions established in the application layer are held.

The data transmission unit 108 transmits desired data to the coupled peripheral device AP. The data reception unit 109 receives desired data from the coupled peripheral device AP.

In the foregoing, the hardware configuration and the function configuration of the smartphone 4 according to the first to third embodiments have been described. Next, operations of the smartphone according to the first to third embodiments will be explained one by one.

### <First Embodiment>

### [Operation (Communication Control Processing) of Smartphone]

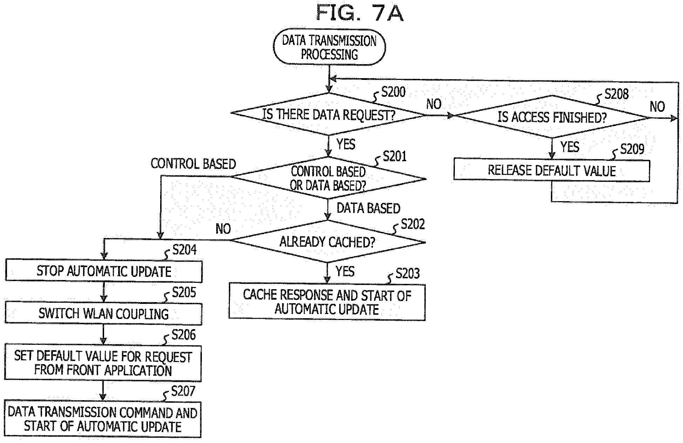

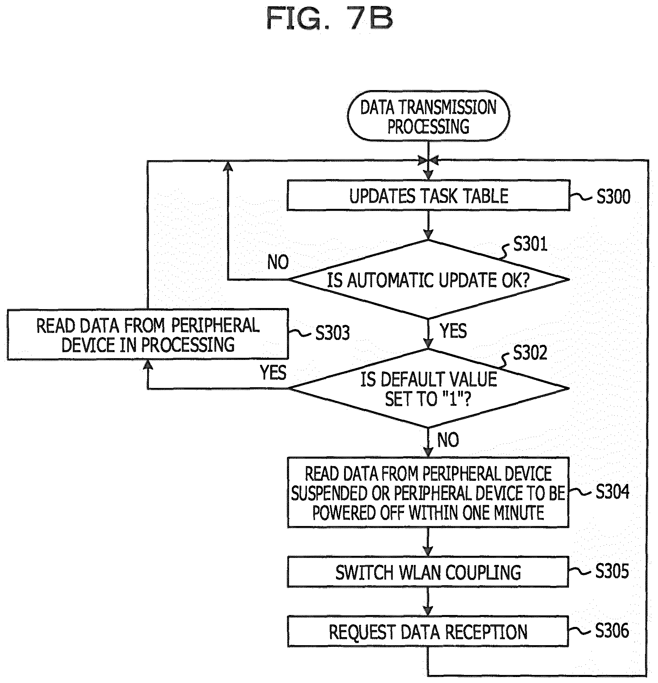

An example of communication control processing executed by the smartphone 4 according to the first embodiment will be explained with reference to FIGs. 7A and 7B. FIGs. 7A and 7B are flowcharts illustrating an example of the communication control processing according to the first embodiment.

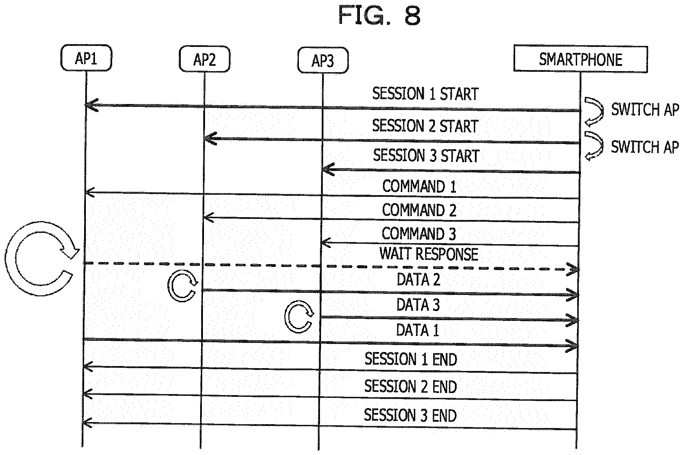

As a precondition, the session establishing unit 104 already establishes sessions of communication with the peripheral devices AP1, AP2, and AP3, and manages the holding of the established sessions (state of Sessions 1, 2, and 3 start in FIG. 8).

For example, when an access request command is transmitted to the peripheral device AP1 in response to a command by an application being executed (command 1 in FIG. 8), as illustrated in FIG. 6, a control base task (task No. 1) to the peripheral device AP1 is stored in the task table 103. In this manner, the management unit 102 manages information relating to a task to be generated as task information on communication with the peripheral device generated during the established session. Note that, a task stored in the task table 103 is erased from the task table 103 when the task is completely processed.

### (Communication Control Processing: Processing at Data Transmission Side)

When the communication control processing (processing at data transmission side) in FIG. 7A is started, and a data request (access request) is made to the peripheral device AP (step S200), the coupling switching unit 106 determines whether the data request is a control based request or a data based request (step S201).

If it is the data based request, the coupling switching unit 106 determines whether the requested data has already been cached (step S202). For example, data of images and the like on a browser have already been acquired in the memory 11 or the secondary storage device 15 of the smartphone 4, it is determined that the data has been cached. If it is determined that the data has been cached, the coupling switching unit 106 transmits a response that the data has been cached and a command to start an automatic update (data reception) (step S203). In response to the notification and the command, communication control processing (processing at data reception side), which is described later, is started.

If the requested data has not been cached at step S202 or if the data request is a control based request at step S201, the coupling switching unit 106 stops an automatic update of the data being executed in the data reception unit 109 (step S204).

Next, in response to an access request to a different peripheral device, the coupling switching unit 106 terminates the coupling to a peripheral device coupled in the physical layer, and switches the coupling to the different peripheral device targeted by the access request (step S205). At this time, the coupling to the peripheral device is switched in the physical layer while the sessions established in the application layer are held.

Next, if the access request is from a front application, the management unit 102 sets a default value in the task table 103 to "1" (step S206). Next, the data transmission unit 108 transmits a data transmission command and a command to start the automatic update (data reception) (step S207).

In contrast, if no data request (access request) is made at step S200, the data transmission unit 108 determines that the access is finished (step S208). If the access is not finished, the processing returns to step S200, whereas if the access is finished, the management unit 102 sets the default value of the finished task to "0", and releases the default value (step S209).

For example, FIG. 8 illustrates a state where an application executed in the smartphone 4 is switched, and sessions to the peripheral devices AP1, AP2, and AP3 are established in the application layer (Sessions 1, 2, and 3 start). Described is an example in which after an access request command 1 (command 1) is transmitted to the peripheral device AP1 in the above state, an access request command 2 (command 2) is transmitted to the peripheral device AP2. In this example, the coupling switching unit 106 switches the coupling to the peripheral device in the physical layer, while the sessions established to the peripheral devices AP1, AP2, and AP3 in the application layer are held.

In FIG. 8, the coupling switching unit 106 terminates, in response to an access request to the peripheral device AP2, the coupling to the peripheral device AP1 being coupled in the physical layer, and switches the coupling to the different peripheral device AP2 targeted by the access request. Then, the data transmission unit 108 transmits the access request command 2 (command 2) to the peripheral device AP2. This notifies the peripheral device AP2 of a data transmission command.

Thereafter, when an access request command 3 (command 3) is transmitted to the peripheral device AP3, the coupling switching unit 106 terminates the coupling to the peripheral device AP2 in the physical layer, and switches the coupling to the peripheral device AP3. At this time, the coupling to the peripheral device is switched in the physical layer while the sessions established in the application layer are held. The data transmission unit 108 transmits the access request command 3 (command 3) to the peripheral device AP3. This notifies the peripheral device AP3 of a data transmission command.

### (Communication Control Processing: Processing at Data Reception Side)

When a predetermined period of time is elapsed, communication control processing (processing at data reception side) in FIG. 7B is started in an asynchronous manner to the abovementioned processing at the data transmission side. The coupling switching unit 106 updates the task table 103 (step S300).

Next, the coupling switching unit 106 determines whether an automatic update of data (data reception) is possible (step S301). If the automatic update of data is impossible, the coupling switching unit 106 repeats the processes at steps S300 and S301. If the automatic update of data is possible, the coupling switching unit 106 determines whether a default value included in the task information on the command 1 in the task table 103 is set to "1" (step S302). If the default value is set to "1", the coupling switching unit 106 determines that the task has a high priority because the request is made from the front application, and reads data from a peripheral device AP in processing (step S303). For example, In FIG. 6, the task No. 1 with the default value 134 of "1" is executed, data from the peripheral device AP1 is read, and the data reception unit 109 receives the data.

In contrast, if the default value 134 is set to "0", the coupling switching unit 106 reads data from a peripheral device being suspended or a peripheral device in which a power supply is to be turned off within one minute (step S304). For example, the coupling switching unit 106 may preferably read data from the peripheral device AP in which the task state 136 included in the task information on the command 2 in the task table 103 is "suspend". Alternately, the coupling switching unit 106 may preferably read data from the peripheral device AP in which the sleep-mode shift time 133 is short. The coupling switching unit 106 can determine the order of priority of the peripheral devices from which data is read based on at least any information on the default value 134, the task state 136, the sleep-mode shift time 133, and the task No. 130, out of the information stored in the task table 103 with which the priority of tasks is determined.

Next, the coupling switching unit 106 switches the coupling in the physical layer to the peripheral device AP that is determined as to have the highest order of priority based on the task information in the task table 103 at step S304 (step S305). For example, if it is determined that the peripheral device AP2 has the highest order of priority at step S304, the coupling switching unit 106 terminates the coupling to the peripheral device AP1, and couples the peripheral device AP2 thereto. At this time, only the coupling in the physical layer is switched while the sessions remain to be established. The data reception unit 109 requests data reception to the coupled peripheral device AP (herein, the peripheral device AP2), and receives desired data (step S306). Accordingly, the smartphone 4 receives data, receives a wait response, or receives error information. For example, in FIG. 8, with respect to the command 1 from the smartphone 4, the peripheral device AP1 transmits a wait response (Wait response).

Next, processes at steps S300 to S304 are executed, and if it is determined that the peripheral device AP3 has the highest order of priority at step S304, the coupling switching unit 106 switches the coupling in the physical layer so as to terminate the coupling to the peripheral device AP2 and establish coupling to the peripheral device AP3. The data reception unit 109 requests data reception to the coupled peripheral device AP3, and receives desired data (step S306). Accordingly, the smartphone 4 receives data of data 2 and data of data 3 illustrated in FIG. 8. When the data of data 2 and the data of data 3 are completely received, the task states 136 of the peripheral device AP2 (task No. 2) and the peripheral device AP3 (task No. 3) in the task table 103 become "completed", and the tasks are erased from the task table 103. As a result, a task of the peripheral device AP1 (task No. 1) stored in the task table 103 is executed next. Therefore, the coupling switching unit 106 establishes coupling to the peripheral device AP1 in the physical layer, and the data reception unit 109 receives data of data 1 in FIG. 8. Note that, when all the tasks are completely processed, the session establishing unit 104 ends the established sessions ("Session 1 end", "Session 2 end", and "Session 3 end" in FIG. 8).

As explained above, with the communication control processing according to the first embodiment, in the state where the sessions are established, the task of the data 1 having a large data amount and transmitted from the peripheral device AP1 can be processed after the tasks of the data 2 and 3. This can avoid generation of a delay in communication processing with the peripheral devices AP2 and AP3.

Moreover, in the present embodiment, switching the coupling to the peripheral devices AP in the physical layer is controlled, so that the sessions to the respective peripheral devices are held in the established state. This can increase the efficiency of the coupling when wireless communication with the multiple peripheral devices is performed.

### (Configuration Example)

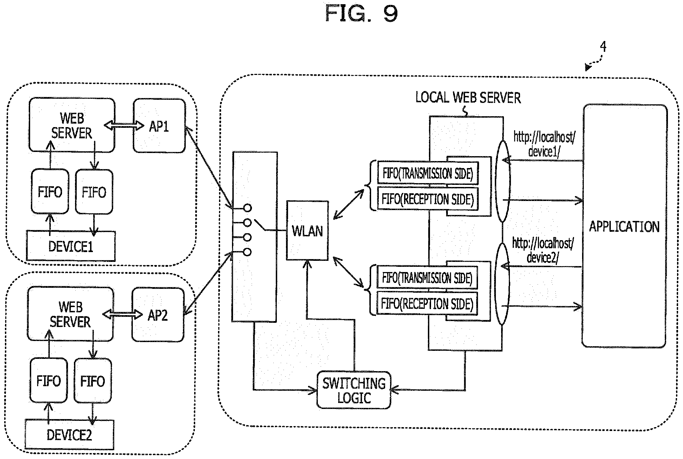

The communication control system 5 according to the first embodiment can include, for example, as illustrated in FIG. 9, a configuration example in which the smartphone 4 is in association with a local Web server, peripheral devices APs (the peripheral devices also function as access points) are in association with Web servers. An application operating on the smartphone 4 accesses the local Web server, and the local Web server controls the switching of coupling and uncoupling in the physical layer of a wireless LAN, in response to a request from the application. In that case, the local Web server switches the peripheral devices using the logics of the coupling switching at the data transmission side and the coupling switching at the data reception side illustrated in the flow of FIGs. 7A and 7B. In other words, based on the state of each task in the task table 103 (FIFO), the local Web server specifies the peripheral device AP that performs data communication, and switches the coupling to the peripheral device AP in the physical layer. Further, the local Web server separately controls data transmission and data reception to and from each of the coupled peripheral devices APs.

The Web server of the coupled peripheral device AP transmits desired data stored in the peripheral device in response to a request of data transmission. Similarly, the Web server receives desired data stored in the peripheral device in response to a request of data reception.

As explained above, in the present embodiment, the smartphone 4 performs the coupling switching at the data transmission side and the coupling switching at the data reception side in an asynchronous manner to implement pseudo-synchronous coupling of the smartphone 4 to multiple peripheral devices APs. This can increase the response property to a user who uses the smartphone 4.

The foregoing is merely an example of the communication control system 5 according to the first embodiment, and the application mode of the communication control system 5 is not limited thereto. For example, in the configuration of the communication control system 5 illustrated in FIG. 9, the local Web server executes the coupling switching in the physical layer in accordance with a command from the application of the smartphone 4. However, the function of the coupling switching in the physical layer may preferably be executed a server other than the local Web server or the smartphone 4. Moreover, the task table 103 may preferably be stored in a storage region in the smartphone 4, or in another storage region to which the smartphone 4 or the local Web server is accessible.

### <Second Embodiment>

### (Configuration Example)

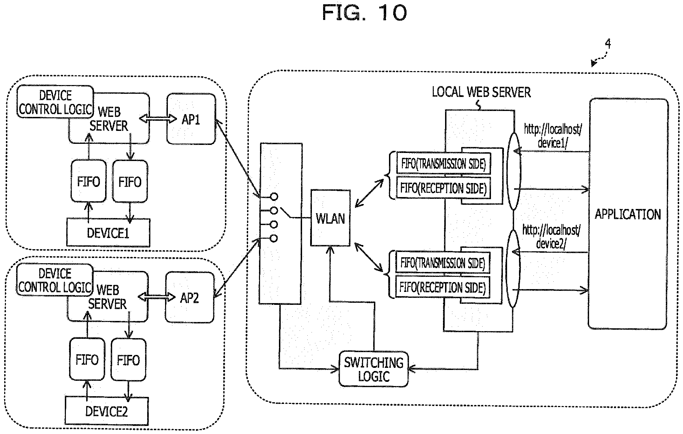

Next, the communication control system 5 according to the second embodiment will be explained with reference to FIG. 10. The communication control system 5 according to the second embodiment performs device control in a Web server as illustrated in FIG. 10 (device control logic). The communication control system 5 according to the second embodiment is similar to the communication control system 5 according to the first embodiment except that the Web server performs the device control. Accordingly, the device control logic will be mainly explained below, and other explanation is omitted.

In the second embodiment, a Web server in association with the peripheral device AP has a function of managing a command transmitted from the smartphone 4. For example, the Web server stores a command transmitted from the smartphone 4. Moreover, the Web server stores a status indicating an execution status of the stored command in correspondence with the command. The storage region in which a command and a status of the command may be preferably stored in a storage region either in the inside or in the outside of the peripheral device.

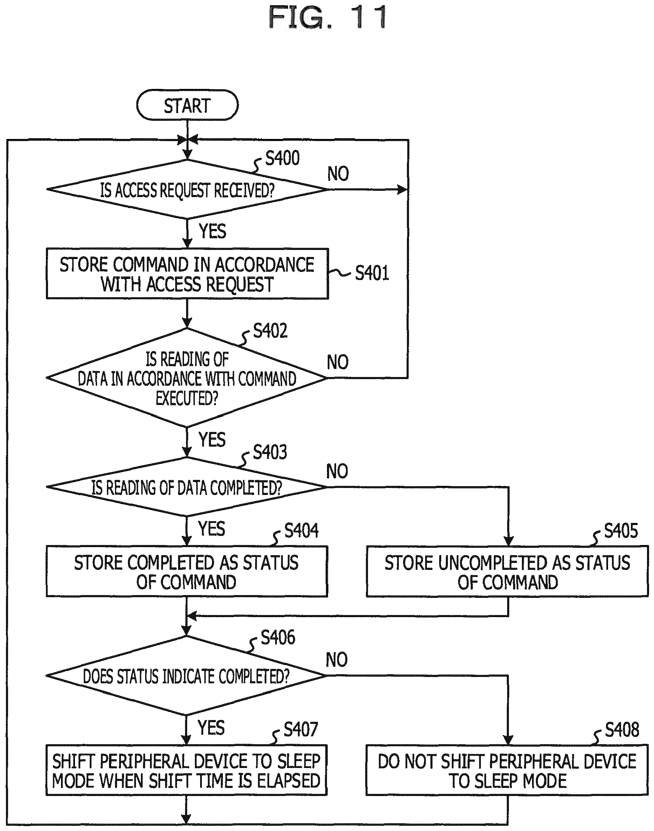

The Web server controls the peripheral device (device) based on the execution status of the command. The device control by the Web server will be explained with reference to a flowchart of device control processing in FIG. 11.

When device control processing is started, the Web server determines whether an access request is received (step S400), if determining that the access request is received, the Web server stores therein a command in accordance with the access request (step S401). Next, the Web server determines whether reading of data in accordance with the command is executed (step S402). If the reading of data is not executed, the processing returns to step S400, and repeats the process at step S400.

In contrast, if reading of data is executed, the Web server determines whether the reading of data has completed (step S403). If the reading of data has completed, the Web server stores completed as the status of the command (step S404). In contrast, if the reading of data has not completed, the Web server stores uncompleted as the status of the command (step S405).

Next, the Web server determines whether the status indicates completed (step S406). If the status indicates completed, the Web server shifts the peripheral device to a sleep mode when the shift time to the sleep mode is elapsed (step S407). In contrast, the status indicates not completed, the Web server does not shift the peripheral device to a sleep mode even when the shift time to the sleep mode is elapsed (step S408).

As explained above, with the communication control system 5 according to the second embodiment, the peripheral device stores therein and manages a status indicating an execution status of a command. Accordingly, in the second embodiment, the peripheral device in a state where the coupling is terminated and reading of data is suspended halfway can be controlled so as not to shift to a sleep mode even after the shift time is elapsed. This can avoid the data to be erased because the peripheral device is shifted to the sleep mode. Therefore, even if reading of data is suspended halfway in a given peripheral device, when the peripheral device is coupled again, the reading of data can be started from the data halfway at which the reading is suspended.

### <Third Embodiment>

### (Configuration Example)

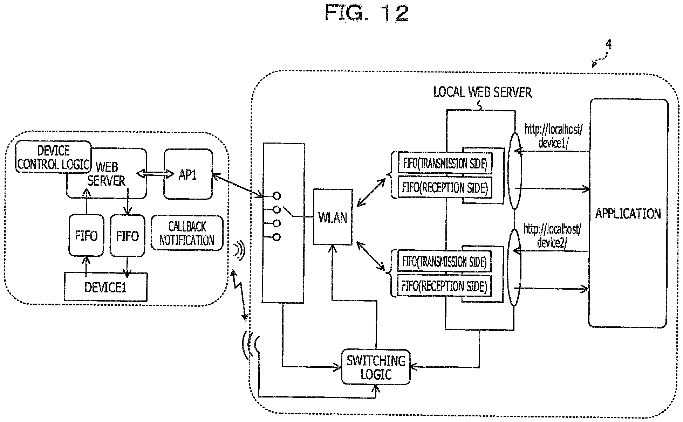

Lastly, the communication control system 5 according to the third embodiment will be explained with reference to FIG. 12. As illustrated in FIG. 12, the communication control system 5 according to the third embodiment has a configuration in which a peripheral device performs callback notification, in addition to the control by the coupling switching logic in the first embodiment and the device control logic in the second embodiment.

The communication control system 5 according to the third embodiment is similar to the communication control system 5 according to the second embodiment except that the peripheral device performs callback notification. Accordingly, the callback notification will be mainly explained below, and other explanation is omitted.

In the third embodiment, the peripheral device performs callback notification when data transmission is completely prepared. The callback notification is executed using a communication scheme different from the wireless LAN used for data communication. For example, when the wireless LAN used for data communication is Wi-Fi, a communication scheme other than Wi-Fi, for example, a communication scheme such as Bluetooth low energy (BLE) is used to broadcast transmit the callback notification. The smartphone 4 present in a position at which data communication with the peripheral device is possible receives the callback notification.

Information that is notified in the callback includes information for specifying a peripheral device, for example, WLAN service set identifier (SSID). Accordingly, the smartphone 4 can know which peripheral device is completely prepared for data transmission, thereby enabling useless polling from the smartphone 4 side to be reduced.

In the foregoing, the terminal apparatus, the communication control system, and the communication control method are explained with the abovementioned embodiments, however, the present disclosure is not limited to the abovementioned embodiments but various modifications and improvements are possible within the scope of the claims. Moreover, the multiple embodiments and modification examples can be combined in the range without contradiction.

## Claims

1. An apparatus (4) comprising:
a session establishing unit (104) configured to establish sessions of communication between the apparatus and each of a plurality of devices (AP1, AP2, AP3) in an upper layer of a communication protocol stack; and
a coupling switching unit (106) configured to, in response to an access request from the apparatus to a first device out of the plurality of devices after said sessions of communication have been established, switch coupling of the apparatus to the first device by terminating coupling to a second device out of currently-coupled devices among the plurality of devices in a lower layer of the communication stack while holding in the established state the sessions of communication in the upper layer; **characterised in that** the coupling switching unit (106) is further configured to, when a predetermined period of time is elapsed after the coupling is switched to the first device, switch the coupling to a predetermined device other than the first device out of the plurality of devices by terminating the coupling to the first device in the lower layer of the communication protocol stack while holding in the established state the sessions of communication in the upper layer.

2. The apparatus according to claim 1, wherein
the upper layer is an application layer of the communication protocol stack and the lower layer is a physical layer of the communication protocol stack.

3. The apparatus according to claim 1 or 2, wherein
the apparatus further comprising a management unit (102) configured to manage task information (103) on the communication with the plurality of devices in the established sessions, and
the coupling switching unit (106) is further configured to switch the coupling to the predetermined device specified based on the task information.

4. The apparatus according to claim 1, 2 or 3, wherein
the task information includes priority information indicating priority of the communication with the plurality of devices, and
the coupling switching unit (106) is further configured to switch the coupling to the predetermined device specified based on the priority information.

5. A communication control system comprising:
a plurality of devices (AP1, AP2, AP3); and
an apparatus (4) including:
a session establishing unit (104) configured to establish sessions of communication with the plurality of devices in an upper layer of a communication protocol stack; and
a coupling switching unit (106) configured to, in response to a request to a first device out of the plurality of peripheral devices after said sessions of communication have been established, switch coupling of the apparatus (4) to the first device by terminating coupling of the apparatus to a second device out of currently-coupled devices among the plurality of devices in a lower layer of the communication protocol stack while holding in the established state the sessions of communication in the upper layer; **characterized in that** the coupling switching unit (106) is further configured to, when a first predetermined period of time is elapsed, switch the coupling to a predetermined device other than the first device out of the plurality of devices by terminating the coupling of the apparatus to the first device in the lower layer while holding in the established state the sessions of communication in the upper layer.

6. The communication system according to claim 5, wherein the first device transmits data to the apparatus (4) in response to the request from the apparatus.

7. The communication control system according to claim 5 or 6, wherein
the upper layer is an application layer of the communication protocol stack and the lower layer is a physical layer of the communication protocol stack.

8. The communication control system according to claim 5, 6 or 7, wherein
each of the plurality of devices (AP1, AP2, AP3) stores therein a status indicating an execution status of a command received from the apparatus, and
manages whether or not to shift the device to a sleep mode in accordance with the status when a second predetermined period of time is elapsed.

9. The communication control system according to any one of claims 5 to 8 wherein
each of the plurality of devices (AP1, AP2, AP3),
notifies the apparatus that data transmission to the apparatus is completely prepared using a communication scheme different from a communication scheme used to establish the sessions.

10. The communication control system according to any one of claims 5 to 9 wherein
the apparatus (4) further comprising a management unit (102) configured to manage task information (103) on the communication with the plurality of devices in the established sessions, and
the coupling switching unit (106) is further configured to switch the coupling to the predetermined device specified based on the task information.

11. The communication control system according to claim 9, wherein each of the plurality of devices (AP1, AP2, AP3) notifies the apparatus that the data transmission to the apparatus is completely prepared using a callback notification.

12. The communication control system according to any one of claims 5 to 8, wherein after the coupling of the apparatus to the second device is terminated, the second device is configured to transmit a wait response to the apparatus.

13. The communication control system according to claim 10, wherein
the task information (103) includes information indicating priority of the communication with the plurality of devices, and
the coupling switching unit (106) is further configured to switch the coupling to the predetermined device specified based on the information indicating the priority.

14. A communication control method executed by an apparatus, the communication control method comprising:
establishing sessions of communication with a plurality of devices in an upper layer of a communication protocol stack;
in response to an access request to a first device out of the plurality of peripheral devices after said sessions of communication have been established, switching coupling of the apparatus to the first device by terminating coupling of the apparatus to a second device out of currently-coupled devices among the plurality of devices in a lower layer of the communication protocol stack while holding in the established state the sessions of communication in the upper layer; **characterized in that** the method further comprises when a predetermined period of time is elapsed, switching the coupling of the apparatus to a predetermined device other than the first device out of the plurality of devices by terminating the coupling of the apparatus to the first device in the lower layer while holding in the established state the sessions of communication in the upper layer.

15. The communication control method according to claim 14, wherein
the upper layer is an application layer of the communication protocol stack and the lower layer is a physical layer of the communication protocol stack.

16. The communication control method according to claim 14 or 15, wherein the method further comprising:
managing task information (103) on the communication with the plurality of devices in the established sessions, and
switching the coupling to the predetermined device specified based on the task information.

17. The communication control method according to claim 15, wherein
the task information includes priority information indicating priority of the communication with the plurality of devices, and
the method further comprising:
switching the coupling to the predetermined device specified based on the priority information.

18. A program which, when executed on the apparatus, causes the apparatus to carry out the communication control method according to any one of claims 14 to 17.

## Patentansprüche

1. Vorrichtung (4), Folgendes umfassend:
eine Sitzungsherstellungseinheit (104), welche konfiguriert ist, Kommunikationssitzungen zwischen der Vorrichtung und jedem von mehreren Geräten (AP1, AP2, AP3) in einer oberen Schicht eines Kommunikationsprotokollstapels herzustellen; und
eine Kopplungsumschalteinheit (106), welche konfiguriert ist, als Reaktion auf eine Zugriffsanforderung von der Vorrichtung an ein erstes Gerät aus den mehreren Geräten, nachdem die Kommunikationssitzungen hergestellt wurden, eine Kopplung der Vorrichtung an das erste Gerät durch Abbrechen einer Kopplung an ein zweites Gerät aus gegenwärtig gekoppelten Geräten unter den mehreren Geräten in einer unteren Schicht des Kommunikationsstapels umzuschalten, während die Kommunikationssitzungen in der oberen Schicht in dem hergestellten Zustand gehalten werden;
**dadurch gekennzeichnet, dass** die Kopplungsumschalteinheit (106) weiterhin konfiguriert ist, wenn eine vorgegebene Zeitspanne abgelaufen ist, nachdem die Kopplung an das erste Gerät umgeschaltet wurde, die Kopplung an ein vorgegebenes anderes Gerät als das erste Gerät aus den mehreren Geräten durch Abbrechen der Kopplung an das erste Gerät in der unteren Schicht des Kommunikationsprotokollstapels umzuschalten, während die Kommunikationssitzungen in der oberen Schicht in dem hergestellten Zustand gehalten werden.

2. Vorrichtung nach Anspruch 1, wobei
die obere Schicht eine Anwendungsschicht des Kommunikationsprotokollstapels ist und die untere Schicht eine Bitübertragungsschicht des Kommunikationsprotokollstapels ist.

3. Vorrichtung nach Anspruch 1 oder 2, wobei
die Vorrichtung weiterhin eine Verwaltungseinheit (102) umfasst, welche konfiguriert ist, Aufgabeninformationen (103) über die Kommunikation mit den mehreren Geräten in den hergestellten Sitzungen zu verwalten, und
die Kopplungsumschalteinheit (106) weiterhin konfiguriert ist, die Kopplung an das vorgegebene Gerät umzuschalten, welches auf der Grundlage der Aufgabeninformationen bestimmt wurde.

4. Vorrichtung nach Anspruch 1, 2 oder 3, wobei
die Aufgabeninformationen Prioritätsinformationen umfassen, welche eine Priorität der Kommunikation mit den mehreren Geräten angeben, und
die Kopplungsumschalteinheit (106) weiterhin konfiguriert ist, die Kopplung an das vorgegebene Gerät umzuschalten, welches auf der Grundlage der Prioritätsinformationen bestimmt wurde.

5. Kommunikationssteuerungssystem (100), Folgendes umfassend:
mehrere Geräte (AP1, AP2, AP3); und
eine Vorrichtung (4), Folgendes umfassend:
eine Sitzungsherstellungseinheit (104), welche konfiguriert ist, Kommunikationssitzungen mit den mehreren Geräten in einer oberen Schicht eines Kommunikationsprotokollstapels herzustellen; und
eine Kopplungsumschalteinheit (106), welche konfiguriert ist, als Reaktion auf eine Anforderung an ein erstes Gerät aus den mehreren peripheren Geräten, nachdem die Kommunikationssitzungen hergestellt wurden, eine Kopplung der Vorrichtung (4) an das erste Gerät durch Abbrechen einer Kopplung der Vorrichtung an ein zweites Gerät aus gegenwärtig gekoppelten Geräten unter den mehreren Geräten in einer unteren Schicht des Kommunikationsprotokollstapels umzuschalten, während die Kommunikationssitzungen in der oberen Schicht in dem hergestellten Zustand gehalten werden;
**dadurch gekennzeichnet, dass** die Kopplungsumschalteinheit (106) weiterhin konfiguriert ist, wenn eine erste vorgegebene Zeitspanne abgelaufen ist, die Kopplung an ein vorgegebenes anderes Gerät als das erste Gerät aus den mehreren Geräten durch Abbrechen der Kopplung der Vorrichtung an das erste Gerät in der unteren Schicht umzuschalten, während die Kommunikationssitzungen in der oberen Schicht in dem hergestellten Zustand gehalten werden.

6. Kommunikationssystem nach Anspruch 5, wobei das erste Gerät Daten an die Vorrichtung (4) als Reaktion auf die Anforderung von der Vorrichtung sendet.

7. Kommunikationssteuerungssystem nach Anspruch 5 oder 6, wobei
die obere Schicht eine Anwendungsschicht des Kommunikationsprotokollstapels ist und die untere Schicht eine Bitübertragungsschicht des Kommunikationsprotokollstapels ist.

8. Kommunikationssteuerungssystem nach Anspruch 5, 6 oder 7, wobei
jedes der mehreren Geräte (AP1, AP2, AP3)
einen Status darin speichert, welcher einen Ausführungsstatus eines Befehls angibt, welcher von der Vorrichtung empfangen wurde, und
verwaltet, ob das Gerät gemäß dem Status in einen Bereitschaftsbetrieb versetzt werden soll oder nicht, wenn eine zweite vorgegebene Zeitspanne abgelaufen ist.

9. Kommunikationssteuerungssystem nach einem der Ansprüche 5 bis 8, wobei
jedes der mehreren Geräte (AP1, AP2, AP3)
die Vorrichtung benachrichtigt, dass eine Datenübertragung an die Vorrichtung unter Verwendung eines Kommunikationsschemas vollständig vorbereitet ist, welches von einem Kommunikationsschema verschieden ist, welches verwendet wurde, um die Sitzungen herzustellen.

10. Kommunikationssteuerungssystem nach einem der Ansprüche 5 bis 9, wobei
die Vorrichtung (4) weiterhin eine Verwaltungseinheit (102) umfasst, welche konfiguriert ist, Aufgabeninformationen (103) über die Kommunikation mit den mehreren Geräten in den hergestellten Sitzungen zu verwalten, und
die Kopplungsumschalteinheit (106) weiterhin konfiguriert ist, die Kopplung an das vorgegebene Gerät umzuschalten, welches auf der Grundlage der Aufgabeninformationen bestimmt wurde.

11. Kommunikationssteuerungssystem nach Anspruch 9, wobei jedes der mehreren Geräte (AP1, AP2, AP3) die Vorrichtung unter Verwendung einer Rückfragenachricht benachrichtigt, dass die Datenübertragung an die Vorrichtung vollständig hergestellt ist.

12. Kommunikationssteuerungssystem nach einem der Ansprüche 5 bis 8, wobei das zweite Gerät konfiguriert ist, eine Warteantwort an die Vorrichtung zu senden, nachdem die Kopplung der Vorrichtung an das zweite Gerät abgebrochen wurde.

13. Kommunikationssteuerungssystem nach Anspruch 10, wobei
die Aufgabeninformationen (103) Informationen umfassen, welche eine Priorität der Kommunikation mit den mehreren Geräten angeben, und
die Kopplungsumschalteinheit (106) weiterhin konfiguriert ist, die Kopplung an das vorgegebene Gerät umzuschalten, welches auf der Grundlage der Informationen bestimmt wurde, welche die Priorität angeben.

14. Kommunikationssteuerungsverfahren, welches von einer Vorrichtung ausgeführt wird, das Kommunikationssteuerungsverfahren Folgendes umfassend:
Herstellen von Kommunikationssitzungen mit mehreren Geräten in einer oberen Schicht eines Kommunikationsprotokollstapels;
als Reaktion auf eine Zugriffsanforderung an ein erstes Gerät aus den mehreren peripheren Geräten, nachdem die Kommunikationssitzungen hergestellt wurden, Umschalten einer Kopplung der Vorrichtung an das erste Gerät durch Abbrechen einer Kopplung der Vorrichtung an ein zweites Gerät aus gegenwärtig gekoppelten Geräten unter den mehreren Geräten in einer unteren Schicht des Kommunikationsprotokollstapels, während die Kommunikationssitzungen in der oberen Schicht in dem hergestellten Zustand gehalten werden;
**dadurch gekennzeichnet, dass** das Verfahren weiterhin umfasst
Umschalten, wenn eine vorgegebene Zeitspanne abgelaufen ist, der Kopplung der Vorrichtung an ein vorgegebenes anderes Gerät als das erste Gerät aus den mehreren Geräten durch Abbrechen der Kopplung der Vorrichtung an das erste Gerät in der unteren Schicht, während die Kommunikationssitzungen in der oberen Schicht in dem hergestellten Zustand gehalten werden.

15. Kommunikationssteuerungsverfahren nach Anspruch 14, wobei
die obere Schicht eine Anwendungsschicht des Kommunikationsprotokollstapels ist und die untere Schicht eine Bitübertragungsschicht des Kommunikationsprotokollstapels ist.

16. Kommunikationssteuerungsverfahren nach Anspruch 14 oder 15, wobei das Verfahren weiterhin Folgendes umfasst:
Verwalten von Aufgabeninformationen (103) über die Kommunikation mit den mehreren Geräten in den hergestellten Sitzungen, und
Umschalten der Kopplung an das vorgegebene Gerät, welches auf der Grundlage der Aufgabeninformationen bestimmt wurde.

17. Kommunikationssteuerungsverfahren nach Anspruch 15, wobei
die Aufgabeninformationen Prioritätsinformationen umfassen, welche eine Priorität der Kommunikation mit den mehreren Geräten angeben, und
das Verfahren weiterhin Folgendes umfasst:
Umschalten der Kopplung an das vorgegebene Gerät, welches auf der Grundlage der Prioritätsinformationen bestimmt wurde.

18. Programm, welches, wenn es auf der Vorrichtung ausgeführt wird, bewirkt, dass die Vorrichtung das Kommunikationssteuerungsverfahren nach einem der Ansprüche 14 bis 17 ausführt.

## Revendications

1. Appareil (4) comportant :
une unité d'établissement de sessions (104) configurée de manière à établir des sessions de communication entre l'appareil et chaque dispositif d'une pluralité de dispositifs (AP1, AP2, AP3) dans une couche supérieure d'une pile de protocoles de communication ; et
une unité de commutation de couplage (106) configurée de manière à, en réponse à une demande d'accès de l'appareil à un premier dispositif parmi la pluralité de dispositifs, après que lesdites sessions de communication ont été établies, commuter le couplage de l'appareil au premier dispositif, en mettant fin au couplage à un second dispositif parmi des dispositifs actuellement couplés parmi la pluralité de dispositifs dans une couche inférieure de la pile de protocoles de communication, tout en maintenant à l'état établi les sessions de communication dans la couche supérieure ;
**caractérisé en ce que** :
l'unité de commutation de couplage (106) est en outre configurée de manière à, lorsqu'une période de temps prédéterminée s'est écoulée après que le couplage a été commuté au premier dispositif, commuter le couplage à un dispositif prédéterminé distinct du premier dispositif parmi la pluralité de dispositifs, en mettant fin au couplage au premier dispositif dans la couche inférieure de la pile de protocoles de communication, tout en maintenant à l'état établi les sessions de communication dans la couche supérieure.

2. Appareil selon la revendication 1, dans lequel :
la couche supérieure est une couche d'application de la pile de protocoles de communication et la couche inférieure est une couche physique de la pile de protocoles de communication.

3. Appareil selon la revendication 1 ou 2, dans lequel :
l'appareil comporte en outre une unité de gestion (102) configurée de manière à gérer des informations de tâche (103) sur la communication avec la pluralité de dispositifs dans les sessions établies ; et
l'unité de commutation de couplage (106) est en outre configurée de manière à commuter le couplage au dispositif prédéterminé spécifié sur la base des informations de tâche.

4. Appareil selon la revendication 1, 2 ou 3, dans lequel :
les informations de tâche incluent des informations de priorité indiquant la priorité de la communication avec la pluralité de dispositifs ; et
l'unité de commutation de couplage (106) est en outre configurée de manière à commuter le couplage au dispositif prédéterminé spécifié sur la base des informations de priorité.

5. Système de commande de communication comportant :
une pluralité de dispositifs (AP1, AP2, AP3) ; et
un appareil (4) incluant :
une unité d'établissement de sessions (104) configurée de manière à établir des sessions de communication avec la pluralité de dispositifs dans une couche supérieure d'une pile de protocoles de communication ; et
une unité de commutation de couplage (106) configurée de manière à, en réponse à une demande d'accès à un premier dispositif parmi la pluralité de dispositifs périphériques après que lesdites sessions de communication ont été établies, commuter le couplage de l'appareil (4) au premier dispositif, en mettant fin au couplage de l'appareil à un second dispositif parmi des dispositifs actuellement couplés parmi la pluralité de dispositifs dans une couche inférieure de la pile de protocoles de communication, tout en maintenant à l'état établi les sessions de communication dans la couche supérieure ;
**caractérisé en ce que** :
l'unité de commutation de couplage (106) est en outre configurée de manière à, lorsqu'une première période de temps prédéterminée s'est écoulée, commuter le couplage à un dispositif prédéterminé distinct du premier dispositif parmi la pluralité de dispositifs, en mettant fin au couplage de l'appareil au premier dispositif dans la couche inférieure, tout en maintenant à l'état établi les sessions de communication dans la couche supérieure.

6. Système de commande de communication selon la revendication 5, dans lequel le premier dispositif transmet des données à l'appareil (4) en réponse à la demande en provenance de l'appareil.

7. Système de commande de communication selon la revendication 5 ou 6, dans lequel :
la couche supérieure est une couche d'application de la pile de protocoles de communication et la couche inférieure est une couche physique de la pile de protocoles de communication.

8. Système de commande de communication selon la revendication 5, 6 ou 7, dans lequel :
chaque dispositif de la pluralité de dispositifs (AP1, AP2, AP3) :
stocke en son sein un statut indiquant un statut d'exécution d'une instruction reçue en provenance de l'appareil ; et
détermine s'il convient ou non de placer le dispositif dans un mode veille selon le statut lorsqu'une seconde période de temps prédéterminée s'est écoulée.

9. Système de commande de communication selon l'une quelconque des revendications 5 à 8, dans lequel :
chaque dispositif de la pluralité de dispositifs (AP1, AP2, AP3) :
notifie, à l'appareil, qu'une transmission de données à l'appareil est totalement préparée, en utilisant un schéma de communication différent d'un schéma de communication utilisé pour établir les sessions.

10. Système de commande de communication selon l'une quelconque des revendications 5 à 9, dans lequel :
l'appareil (4) comporte en outre une unité de gestion (102) configurée de manière à gérer des informations de tâche (103) sur la communication avec la pluralité de dispositifs dans les sessions établies ; et
l'unité de commutation de couplage (106) est en outre configurée de manière à commuter le couplage au dispositif prédéterminé spécifié sur la base des informations de tâche.

11. Système de commande de communication selon la revendication 9, dans lequel chaque dispositif de la pluralité de dispositifs (AP1, AP2, AP3) notifie, à l'appareil, que la transmission de données à l'appareil est totalement préparée, en utilisant une notification de rappel.

12. Système de commande de communication selon l'une quelconque des revendications 5 à 8, dans lequel dès lors que le couplage de l'appareil au second dispositif a pris fin, le second dispositif est configuré de manière à transmettre une réponse d'attente à l'appareil.

13. Système de commande de communication selon la revendication 10, dans lequel :
les informations de tâche (103) incluent des informations indiquant la priorité de la communication avec la pluralité de dispositifs ; et
l'unité de commutation de couplage (106) est en outre configurée de manière à commuter le couplage au dispositif prédéterminé spécifié sur la base des informations indiquant la priorité.

14. Procédé de commande de communication exécuté par un appareil, le procédé de commande de communication comportant les étapes ci-dessous consistant à :
établir des sessions de communication avec une pluralité de dispositifs dans une couche supérieure d'une pile de protocoles de communication ;
en réponse à une demande d'accès à un premier dispositif parmi la pluralité de dispositifs périphériques, après que lesdites sessions de communication ont été établies, commuter le couplage de l'appareil au premier dispositif, en mettant fin au couplage de l'appareil à un second dispositif parmi des dispositifs actuellement couplés parmi la pluralité de dispositifs dans une couche inférieure de la pile de protocoles de communication, tout en maintenant à l'état établi les sessions de communication dans la couche supérieure ; **caractérisé en ce que** le procédé comporte en outre les étapes ci-dessous consistant à :
lorsqu'une période de temps prédéterminée s'est écoulée, commuter le couplage de l'appareil à un dispositif prédéterminé distinct du premier dispositif parmi la pluralité de dispositifs, en mettant fin au couplage de l'appareil au premier dispositif dans la couche inférieure, tout en maintenant à l'état établi les sessions de communication dans la couche supérieure.

15. Procédé de commande de communication selon la revendication 14, dans lequel :
la couche supérieure est une couche d'application de la pile de protocoles de communication et la couche inférieure est une couche physique de la pile de protocoles de communication.

16. Procédé de commande de communication selon la revendication 14 ou 15, dans lequel le procédé comporte en outre les étapes ci-dessous consistant à :
gérer des informations de tâche (103) sur la communication avec la pluralité de dispositifs dans les sessions établies ; et
commuter le couplage au dispositif prédéterminé spécifié sur la base des informations de tâche.

17. Procédé de commande de communication selon la revendication 15, dans lequel :
les informations de tâche incluent des informations de priorité indiquant la priorité de la communication avec la pluralité de dispositifs ; et
le procédé comporte en outre l'étape ci-dessous consistant à :
commuter le couplage au dispositif prédéterminé spécifié sur la base des informations de priorité.

18. Programme, qui, lorsqu'il est exécuté sur l'appareil, amène l'appareil à mettre en oeuvre le procédé de commande de communication selon l'une quelconque des revendications 14 à 17.
